# EUROPÄISCHE PATENTSCHRIFT

(11) **EP 3 862 824 B1**
(45) Veröffentlichungstag und Bekanntmachung des Hinweises auf die Patenterteilung: **11.01.2023**
(21) Anmeldenummer: 20155390.6
(22) Anmeldetag: 04.02.2020
(51) Int. Cl.: G05B 19/042

(54) **SCHNITTSTELLENMODUL ZUR KONFIGURATION UND PARAMETRIERUNG EINES FELDBUSTEILNEHMERS**
INTERFACE MODULE FOR CONFIGURING AND PARAMETRIZING A FIELD BUS SUBSCRIBER
MODULE D'INTERFACE POUR LA CONFIGURATION ET LE PARAMÉTRAGE D'UN PARTICIPANT DE BUS DE TERRAIN

(43) Veröffentlichungstag der Anmeldung: 11.08.2021
(73) Patentinhaber: Siemens Aktiengesellschaft, 80333 München (DE)
(72) Erfinder: Weber, Tobias, 09212 Limbach-Oberfrohna (DE); Ramm, Enrico, 09117 Chemnitz (DE); Schneider, Dirk, 08115 Lichtentanne (DE)

(56) Entgegenhaltungen:
- EP-A2- 1 697 802
- WO-A2-2015/066745

## Beschreibung

Schnittstellenmodul zur Konfiguration und Parametrierung eines Feldbusteilnehmers.

Die Erfindung betrifft ein Schnittstellenmodul für einen Feldbusteilnehmer umfassend, einen Anschluss für einen Feldbus, zumindest einen Modulsteckplatz zum Anschluss von Sensoren und/oder Aktoren, einen Konfigurationsspeicher zum Abspeichern einer Konfigurations-Datei mit logischen Adressen für den Zugriff von Prozess-Daten der Sensoren und/oder Aktoren, eine Firmware-Infrastruktur zum Aufbau einer Profinet-Verbindung auf Basis einer Profinet-E/A-Verbindung.

Die WO 2015/066745 A2 offenbart ein Verfahren zum Adressieren von linear verketteten Feldbusteilnehmern, wo zum Adressieren in einer Daisy-Chain-Auswahlleitung nach und nach in Reihe geschaltete Schalter geschlossen werden.

Die EP 1 697 802 A2 beschreibt ein HART-Mehrpunktsystem, das mehrere Slavegeräte aufweist, zum durchgehenden Adressieren der Slaves bekommen zunächst alle Slaves die gleiche Adresse.

Ausgangsbasis für die Erfindung ist ein Peripheriesystem mit einer Feldbusschnittstelle, über ein Schnittstellenmodul zur Profinet-Kommunikation Modulsteckplätze für Elektronikmodule angesprochen werden, welche über das Profinet-Slot-Modell adressiert werden, siehe hierzu beispielsweise bei Feldbusse.de, die Erklärung zum Profinet I/O-Gerätemodell.

Für einen Einsatz des oben genannten Peripheriesystems in einer Umgebung ohne Profinet-Controller, z. B. für EtherNet/IP oder Modbus TCP/IP besteht die Notwendigkeit eine Konfiguration und Parametrierung des Peripheriesystems im selbigen remanent abzuspeichern, da diese Informationen nicht zwingend Bestandteil eines Verbindungsaufbaus eines Nicht-Profinet-Controllers sind.

Es ist Aufgabe der Erfindung ein einfaches, flexibles und leistungsfähiges Verfahren zur Übertragung und zur Speicherung der Informationen für Konfiguration und Parametrierung eines Peripheriesystems zu realisieren.

Erfindungsgemäß wird die eingangs genannte Aufgabe durch ein Schnittstellenmodul gelöst. Das Schnittstellenmodul für einen Feldbusteilnehmer umfasst einen Anschluss für einen Feldbus, zumindest einen Modulsteckplatz zum Anschluss von Sensoren und/oder Aktoren, einen Konfigurationsspeicher zum Abspeichern einer Konfigurations-Datei mit logischen Adressen für den Zugriff von Prozess-Daten der Sensoren und/oder Aktoren, eine Firmware-Infrastruktur zum Aufbau einer Profinet-Verbindung auf Basis einer Profinet-E/A-Verbindung.

Dabei tragen die folgenden Merkmale zur Lösung bei. Es ist ein Erkennungsmittel vorhanden, welches ausgestaltet ist, eine Konfigurations-Datei, welche über eine zumindest temporär eingerichtete Applikationsbeziehung empfangen wurde, zu prüfen, ob sie virtuelle Adressen aufweist, welche nicht physikalisch vorhanden sind, weiterhin ausgestaltet für den Fall, dass virtuelle Adressen erkannt werden, ein Signal auszulösen und die empfangene Konfigurations-Datei als eine virtuelle Konfigurationsdatei weiter zu behandeln, das Erkennungsmittel ist dabei weiterhin ausgestaltet, die virtuelle Konfigurationsdatei in einen Konfigurationsspeicher remanent abzuspeichern, ein Rücktransformationsmittel ist vorhanden, welches ausgestaltet ist, die virtuellen Adressen zu physikalisch vorhandenen Adressen, nämlich den logischen Adressen, zurück zu transformieren, wodurch für einen Datenaustausch der Prozess-Daten des Modulsteckplatzes bei Anforderungen durch weitere Feldbusteilnehmer die Prozess-Daten in dem Modulsteckplatz adressiert werden.

Ein Feldbustreiber in dem Schnittstellenmodul erkennt Konfigurationen seiner Modulsteckplätze an einer im virtuellen Nummernband liegenden Steckplatznummern in der ihn zugesendeten Soll-Konfiguration und legt die Konfigurationsdaten in den Konfigurationsspeicher remanent ab. Zusätzlich werden die Konfigurationsdaten im virtuellen Nummernband in eine Ist-Konfiguration eingetragen. Auf Basis einer einfachen bestehenden Kommunikationsart zwischen den Profinet bzw. Feldbusteilnehmern können Parametrierdatensätze, nämlich die Konfigurationsdateien für beliebige Feldbusteilnehmer bzw. Schnittstellenmodule adressiert werden und vom Schnittstellenmodul können diese abgefangen werden, weil die Schnittstellenmodule anhand der virtuellen Nummern erkennen, dass dies für sie ein Parametrierdatensatz sein muss.

Weiterhin vorteilhaft ist, dass das Schnittstellenmodul eine Firmware-Infrastruktur mit zumindest eine der folgenden Komponenten aufweist: Ein Ethernet Device Driver für die Abstraktion der Netzwerk-Hardware, ein TCP/IP-Stack als Grundlage für IP- und verbindungsorientierte Protokolle, ein Profinet-Stack, in welchem, normierte Protokolle und Datenstrukturen implementiert sind, ein Profinet Device Driver, welcher als Adapter zum Profinet-Stack genutzt, ein Feldbusinterface Manager zur Anbindung unterschiedlicher Feldbusse.

Für einen Betrieb der Schnittstellenmodule nach einem Spannungsausfall ist es vorteilhaft, wenn das Schnittstellenmodul weiterhin mit einem Initialisierungsmittel ausgestaltet ist, das Initialisierungsmittel ist derart ausgestaltet, dass es nach einem Spannungsausfall bzw. einem Wiederanlauf auf die abgespeicherte Konfigurations-Datei mit den virtuellen Adressen zugreift, und diese virtuellen Adressen zur realen logischen Adressen transformiert und eine Initialisierungsphase durchläuft um danach wieder kommunikationsbereit zu sein.

Die Zeichnung führt ein Ausführungsbeispiel der Erfindung an, dabei zeigen die
- FIG 1: einen Überblick einer Kopplung zwischen einem Engineering-System und einem Peripheriesystem mit einem Schnittstellenmodul,
- FIG 2: das Versenden einer Konfigurationsdatei über den Feldbus mit Hilfe einer Applikationsbeziehung,
- FIG 3: das Auslesen einer Konfigurationsdatei aus dem Schnittstellenmodul,
- FIG 4: ein Selbststart eines Schnittstellenmoduls und
- FIG 5: eine Zusammenstellung an Treibern, Profinetmechanismen, Protokollen und Kommunikations-Stacks.

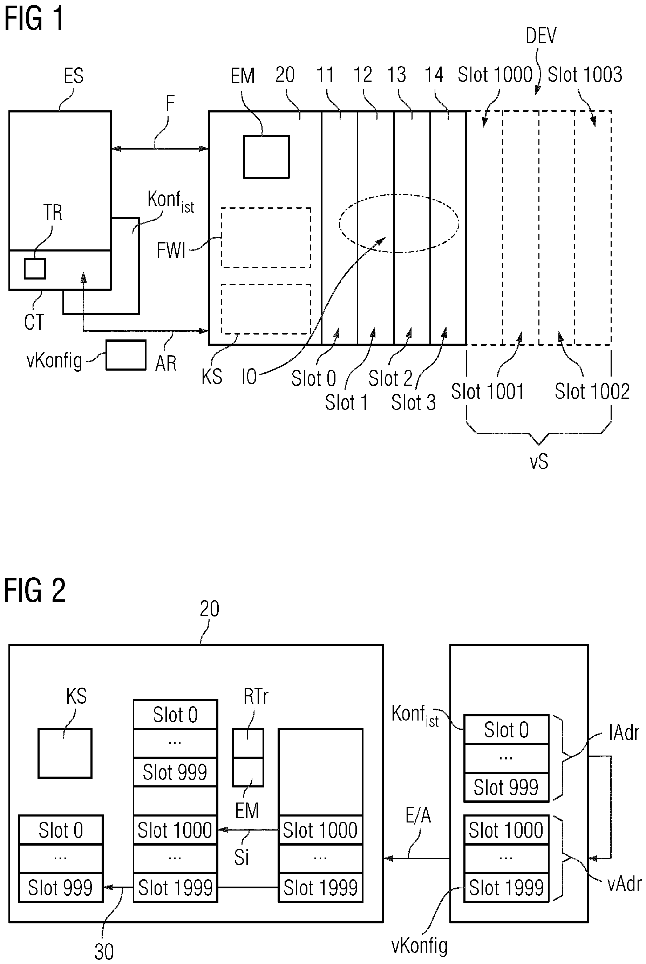

Gemäß FIG 1 ist ein Engineering-System ES über einen Feldbus F an ein Schnittstellenmodul 20 angeschlossen. Das Engineering-System ES weist ein Konfigurationswerkzeug CT auf, welches ausgestaltet ist, eine Konfiguration und Parametrierung von Feldbusteilnehmern zu erlauben, insbesondere von Multifeldbus-Geräten. Ein derartiges Engineering-System ES bzw. das darin enthaltene Konfigurationswerkzeug CT ist derart ausgestaltet, dass es beispielsweise eine Vielzahl von Profinet-konformen Geräte unabhängig von deren Hersteller unterstützt. Als Vorteil von derart multifunktionellen Konfigurationswerkzeugen wird angesehen, dass sie ein kleines effektives Softwarepaket bilden und eine Konfiguration von Profinet bzw. allgemein Peripherieteilnehmern auf einfache Weise zulassen ohne dass ein Anwender ein großes umfangreiches Softwarepaket installieren muss.

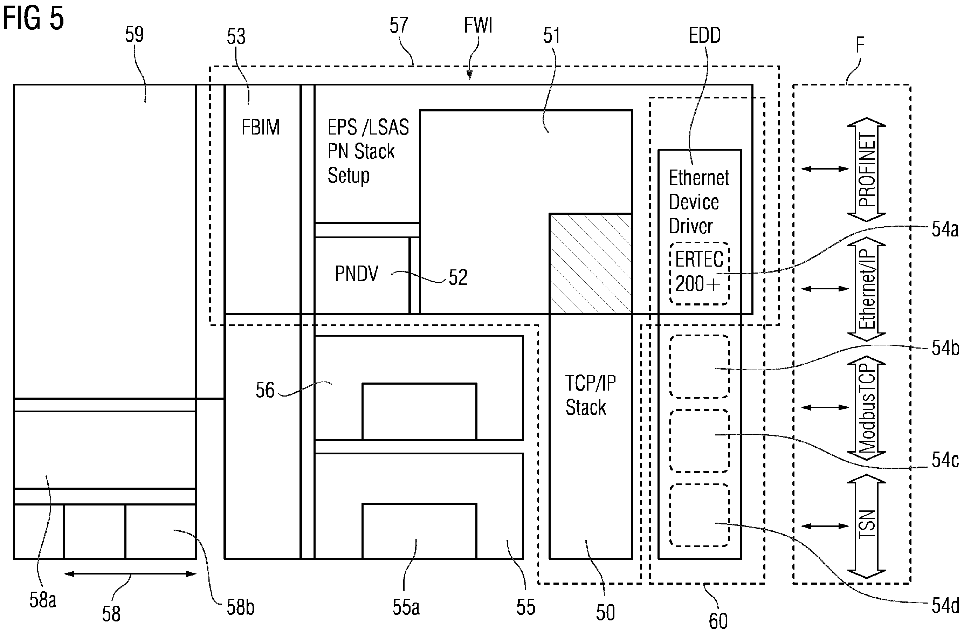

Das Schnittstellenmodul 20 weist einen Feldbusteilnehmer Dev auf, welcher neben dem Schnittstellenmodul 20 mehrere Modulsteckplätze aufweist, nämlich ein erster Modulsteckplatz 11, ein zweiter Modulsteckplatz 12, ein dritter Modulsteckplatz 13 und ein vierter Modulsteckplatz 14. Die Modulsteckplätze 11,12,13,14 bilden ebenso einen Slot 0, einen Slot 1, einen Slot 2, einen Slot 3. Die Slots 0,...,3 sind dabei durch reale logische Adressen lAdr abbildbar. Für den Zugriff von Prozessdaten I/O können mittels des Konfigurationswerkzeuges CT zum Anschluss von Sensoren und/oder Aktoren an die Modulsteckplätze logische Adressen lAdr für den Zugriff der Prozessdaten der Sensoren und/oder Aktoren vergeben werden. Auch wird durch das Konfigurationswerkzeug CT eine Applikationsbeziehung AR zumindest temporär zwischen dem Engineering-System ES und dem Schnittstellenmodul 20 eingerichtet. Um nun mit einfachen Mitteln einen Projekt-Download bzw. einen Download einer Konfigurations-Datei Konfᵢₛₜ zu einem Feldbusteilnehmer zu realisieren, wird in dem bestehenden Peripheriesystem eine bestehende Firmwareinfrastruktur FWI (siehe FIG 5) zum Aufbau einer Profinet-Verbindung unter Nutzung robuster normierter Protokolle und Datenstrukturen auf Basis einer Profinet-E/A-Verbindung zur Übertragung der Konfigurations- und Parametrierdaten genutzt.

Um dem Feldbusteilnehmer Dev bzw. dem Schnittstellenmodul 20 die Möglichkeit zu geben, zu erkennen, dass ein übertragenes Datenpaket nun für ihn bestimmt ist, werden die logischen Adressen lAdr auf der Seite des Engineering-Systems ES mit einem Transformations-Mittel TR zu virtuellen Adressen vAdr hin transformiert, welche nicht physikalisch vorhanden sind, und dadurch wird eine transformierte virtuelle Konfigurations-Datei vKonfig erstellt, welche über den Feldbus F mit Hilfe der Applikationsbeziehung AR zu dem Schnittstellenmodul 20 versendet wird.

In dem Schnittstellenmodul 20 wird mittels eines Erkennungsmittels EM erkannt, dass in der empfangenen virtuellen Konfigurations-Datei vKonfig virtuelle Adressen vAdr vorliegen, wobei dieses Erkennen ein Signal SI auslöst, welches in dem Schnittstellenmodul 20 dafür sorgt, dass die virtuelle Konfigurations-Datei vKonfig übernommen wird und in einem Konfigurationsspeicher KS remanent gespeichert wird.

Diese Übertragung ist auch in FIG 2 dargestellt, wobei in dem Engineering-System ES die Transformation von realen Adressen Slot 0,...,Slot999 hin zu virtuellen Adressen Slot 1000,...,1999 realisiert worden ist. Die virtuelle Konfigurations-Datei vKonfig wird nun in dem Schnittstellenmodul 20 mittels des Erkennungsmittels EM erkannt und mittels eines Rücktransformationsmittels RTr in reale Adressen zurücktransformiert. Ausgelöst wird das über das Signal SI. Der Schritt 30 transformieren und speichern zeigt, dass es in einem Projektspeicher und letztendlich in dem Konfigurationsspeicher KS remanent abgelegt wird.

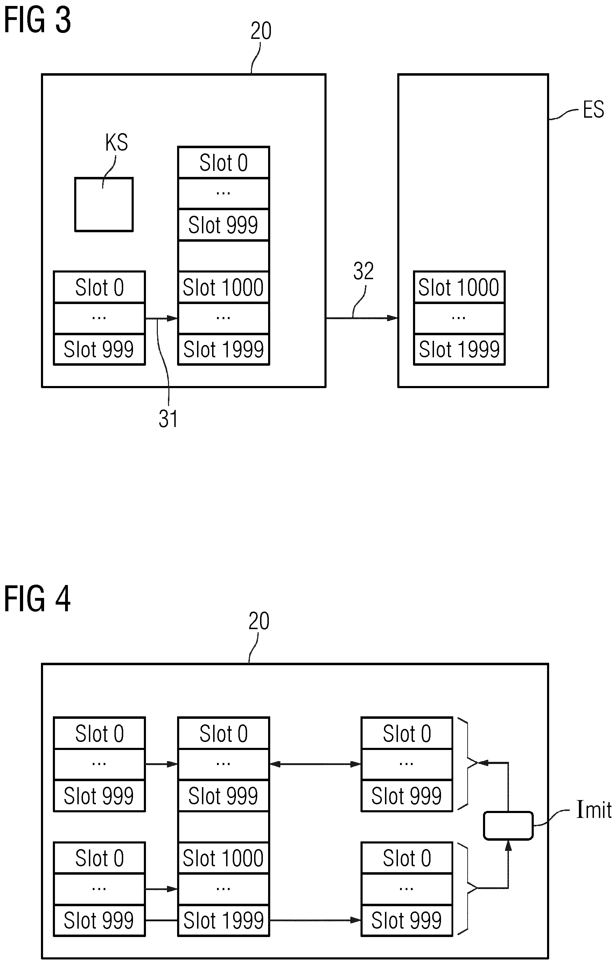

Gemäß FIG 3 ist der umgekehrte Weg aufgezeigt von dem Schnittstellenmodul 20 wird über den Schritt 31 transformieren aus "Devicesicht" eine Konfigurationsdatei mit virtuellen Adressen vAdr erstellt, welche über einen Leseschritt 32 vom Engineering-System ES gelesen wird.

Die FIG 4 zeigt, wie sich ein Schnittstellenmodul 20 mit Hilfe eines Initialisierungssmittel Init nach einem Spannungsausfall oder nach einem Wiederanlauf mit Hilfe der abgespeicherten virtuellen Konfigurations-Datei vKonf selber neu parametriert um nach einer Initialisierungsphase erneut kommunikationsbereit zu sein.

Die FIG 5 zeigt eine Softwarearchitektur mit einer Vielzahl an Treibern, Profinet-Stacks, Hardwareplattformen, Ethernet Stacks und Rückwandbuskopplung, dabei wird aus dieser Gesamtheit als ein Basissatz 57 die bereits erwähnte Firmware-Infrastruktur FWI genutzt. Diese genutzte Firmware-Infrastruktur FWI umfasst die Komponenten, welche innerhalb der gestrichelten Linie liegen, diese sind ein Feldbusmanager 53 FBIM, ein Profinet-Stack 51, ein TCP/IP-Stack 50, ein Ethernet Device Driver EDD eines Ethernet ASIC für Profinet I/O 54a, hier im speziellen ein ERTEC 200+. Des Weiteren könnten in der Ethernet Device Driver Einheit EDD auch ein erster Chip 54 für ein beliebiges SOC (System on Chip), ein zweiter Chip 54c für ein weiteres beliebiges SOC und/oder ein dritter Chip 54d, beispielsweise für einen TSN-Treiber, vorhanden sein. Die genannten Chips sind mit der rechteckig umschlungenen Linie als Hardwareplattform 60 gekennzeichnet. Der an die Hardwareplattform 60 angeschlossene Feldbus F könnte als ein Profinet, ein EtherNet/IP, ein Modbus TCP/IP TCP oder einen TSN-Feldbus ausgestaltet sein.

Weiterhin weist die aufgezeigte Architektur einen EtherNet/IP-Device Treiber 56, einen Modbus Treiber 55 mit einem Modbus Stack 55a auf. Für eine generelle Geräteapplikation ist eine Geräte-Applikation 59 für das Schnittstellenmodul 20 vorhanden. Ein Rückwandbus-Interface 58a erlaubt, über spezielle Koppler 58b, den Zugriff auf einen Rückwandbus 58, beispielsweise zu dezentralen Peripheriegeräten der Gruppe Simatic ET200.

Zur weiteren Erklärung sei auf die Adressierung der I/O-Daten im Folgenden verwiesen.

### Adressierung der I/O-Daten

Der Slot kennzeichnet den physikalischen Steckplatz einer Peripheriebaugruppe in einem modularen I/O-Feldgerät in dem ein in der GSD-Datei beschriebenes Modul platziert wird. Anhand der unterschiedlichen Slots werden die projektierten Module adressiert, die einen oder mehrere Subslots (die eigentlichen I/O-Daten) für den Datenaustausch enthalten.

Innerhalb eines Slots bilden die Subslots die eigentliche Schnittstelle zum Prozess (Ein-/Ausgänge). Die Granularität eines Subslots (bit-, byte-, wortweise Aufteilung der I/O-Daten) bestimmt der Hersteller. Der Dateninhalt eines Subslots wird immer durch eine Statusinformation begleitet, aus der die Gültigkeit der Daten abgeleitet werden kann.

Der Index spezifiziert die Daten innerhalb eines Slots/Subslots, die azyklisch über Read-/Write-Services gelesen oder geschrieben werden können. Anhand eines Index können beispielsweise Parameter an eine Baugruppe geschrieben oder herstellerspezifische Baugruppendaten ausgelesen werden.

Wie viele Slots/Subslots ein IO-Device bearbeiten kann, legt der Hersteller bei den Definitionen in der GSD-Datei fest. Die Adressierung der zyklischen I/O-Daten erfolgt durch die Angabe der Slot/Subslot-Kombination. Diese kann vom Hersteller frei definiert werden.

Beim azyklischen Datenverkehr über Read-, Write-Services kann eine Anwendung die zu adressierenden Daten mit Slot, Subslot genau spezifizieren. Für den bedarfsorientierten Datenaustausch kommt die dritte Adressierungsebene, der Index hinzu. Der Index definiert dabei die Funktion, die über die Slot-/Subslot-Kombination ausgelöst werden soll (z.B. Lesen der Eingabedaten eines Subslots, Lesen der I&M-Funktionen, Lesen der Ist-/Sollkonfiguration).

## Patentansprüche

1. Schnittstellenmodul (20) für einen Feldbusteilnehmer (Dev) umfassend
- einen Anschluss für einen Feldbus (F), zumindest
- einen Modulsteckplatz (11) ausgestaltet zum Anschluss von Sensoren und/oder Aktoren,
- einen Konfigurationsspeicher (KS) ausgestaltet zum Abspeichern einer Konfigurations-Datei (Konfᵢₛₜ) mit logischen Adressen (lAdr) für den Zugriff von Prozess-Daten (IO) der Sensoren und/oder Aktoren,
- eine Firmware-Infrastruktur (FWI) zum Aufbau einer Profinet-Verbindung auf Basis einer Profinet-E/A-Verbindung,
**gekennzeichnet durch**,
ein Erkennungsmittel (EM), welches ausgestaltet ist eine Konfigurations-Datei (Konfᵢₛₜ), welche über eine zumindest temporär eingerichtete Applikationsbeziehung (AR) empfangen wurde zu prüfen, ob sie virtuelle Adressen (vAdr) aufweist, welche nicht physikalisch vorhanden sind, weiterhin ausgestaltet für den Fall, dass virtuelle Adressen (vAdr) erkannt worden sind, ein Signal (Si) auszulösen und die empfangene Konfigurations-Datei (Konfist) als eine virtuelle Konfigurations-Datei (vKonfig) weiter zu behandeln, das Erkennungsmittel (EM) ist weiterhin ausgestaltet, die virtuelle Konfigurations-Datei (vKonfig) in einen Konfigurationsspeicher (KS) remanent abzuspeichern,
ein Rück-Transformationsmittei (RTr), welches ausgestaltet ist, die virtuellen Adressen (vAdr) zu physikalisch vorhandenen Adressen, nämlich den logischen Adressen (lAdr), zurück zu transformieren, wodurch für einen Datenaustausch der Prozess-Daten (IO) des Modulsteckplatzes (11) bei Anforderung durch weitere Feldbusteilnehmer die Prozess-Daten (IO) in dem Modulsteckplatz (11) adressiert werden.

2. Schnittstellenmodul (20) nach Anspruch 1, aufweisend eine Firmware-Infrastruktur (FWI) mit zumindest einer der folgenden Komponenten:
- ein Ethernet Device Driver (EDD) für die Abstraktion der Netzwerk-Hardware,
- ein TCP/IP Stack als Grundlage für IP- und verbindungsorientierte Protokolle,
- ein Profinet-Stack in welchem, normierte Protokolle und Datenstrukturen implementiert sind,
- ein Profinet Device Driver (PNDV), welcher als Adapter zum Profinet-Stack genutzt wird,
- ein Feldbus Interface Manager (FBIM) zur Anbindung unterschiedlicher Feldbusse.

3. Schnittstellenmodul (20) nach Anspruch 1 oder 2, weiterhin aufweisend ein Initialisierungs-Mittel (Init), welches ausgestaltet ist nach einem Spannungsausfall bzw. einem Wiederanlauf auf die abgespeicherte Konfigurations-Datei (vKonfig) mit den virtuellen Adressen (vAdr) zuzugreifen, diese zu transformieren und mit den erhaltenen realen logischen Adressen (lAdr) eine Initialisierungsphase zu durchlaufen um danach kommunikationsbereit zu sein.

## Claims

1. Interface module (20) for a field bus user (Dev), comprising
- a connection for a field bus (F), at least
- one module slot (11) configured for the connection of sensors and/or actuators,
- a configuration store (KS) configured for storing a configuration file (Konfᵢₛₜ) with logical addresses (lAdr) for accessing process data (IO) of the sensors and/or actuators,
- a firmware infrastructure (FWI) for establishing a Profinet connection on the basis of a Profinet I/O connection,
**characterised by**
a recognition means (EM) which is configured to test a configuration file (Konfᵢₛₜ) which was received via an at least temporarily created application relation (AR) as to whether it has virtual addresses (vAdr) which are not physically present, and is further configured, for the event that virtual addresses (vAdr) have been recognized, to trigger a signal (Si) and to treat the received configuration file (Konfᵢₛₜ) further as a virtual configuration file (vKonfig), and the recognition means (EM) is further configured to store the virtual configuration file (vKonfig) in a configuration store (KS) in a non-volatile manner,
a reverse transformation means (RTr) which is configured to transform the virtual addresses (vAdr) back to physically present addresses, specifically the logical addresses (lAdr), whereby for a data exchange of the process data (IO) of the module slot (11), on a request by further field bus users, the process data (IO) in the module slot (11) is addressed.

2. Interface module (20) according to claim 1, having a firmware infrastructure (FWI) with at least one of the following components:
- an Ethernet device driver (EDD) for the abstraction of the network hardware,
- a TCP/IP stack as the basis for IP-oriented and connection-oriented protocols,
- a Profinet stack in which normalized protocols and data structures are implemented,
- a Profinet device driver (PNDV), which is used as an adapter to the Profinet stack,
- a field bus interface manager (FBIM) for linking different field buses.

3. Interface module (20) according to claim 1 or 2, further having an initializing means (Init) which is configured, following a voltage dropout or a restart, to access the stored configuration file (vKonfig) with the virtual addresses (vAdr), to transform it and to run through an initializing phase with the obtained real logical addresses (lAdr) in order thereafter to be communication-ready.

## Revendications

1. Module (20) d'interface pour un participant (Dev) à un bus sur site comprenant
- un accès pour un bus (F) sur site, au moins
- un emplacement (11) d'enfichage de module conformé pour la connexion de capteurs et/ou d'actionneurs,
- une mémoire (KS) de configuration conformée pour mettre en mémoire un fichier (Konfᵢₛₜ) de configuration par des adresses (1Adr) logiques d'accès à des données (IO) de processus des capteurs et/ou actionneurs,
- une infrastructure (FWI) firmware pour l'établissement d'une liaison profinet, sur la base d'une liaison profinet-E/A,
**caractérisé**
**par** un moyen (EM) de détection, qui est conformé pour contrôler si un fichier (Konfᵢₛₜ) de configuration, qui a été reçu par une relation (AR) d'application, ménagée au moins temporairement, à des adresses (vAdr) virtuelles , qui ne sont pas présentes physiquement, en étant conformé en outre, pour le cas où des adresses (vAdr) virtuelles ont été détectées, déclencher un signal (Si) et continuer à traiter le fichier (Konfist) de configuration reçu comme un fichier (vKonfig) de configuration virtuelle, le moyen (EM) de détection étant conformé en outre pour mettre en mémoire de manière rémanente le fichier (vKonfig) de configuration virtuelle dans une mémoire (KS) de configuration,
un moyen (RTr) de transformation en retour, qui est conformé pour retransformer les adresses (vAdr) virtuelles en adresses présentes physiquement, à savoir les adresses (1Adr) logiques,
grâce à quoi, pour un échange de données des données (IO) de processus de l'emplacement (11) d'enfichage du module, lors d'une demande par d'autres participants au bus sur site, les données (IO) de processus sont adressées dans l'emplacement (11) d'enfichage du module.

2. Module (20) d'interface suivant la revendication 1, comportant une infrastructure (FWI) de firmware ayant au moins l'un des composants suivants :
- un Ethernet Device Driver (EDD) pour l'abstraction du hardware du réseau,
- un TCP/IP Stack comme fondement pour des protocoles à orientation IP et liaison,
- un Profinet Stack, dans lequel des protocoles normés et des structures de données sont mis en œuvre,
- un Profinet Device Driver (PNDV), qui est utilisé comme adaptateur au Profinet Stack,
- une interface manager de bus sur site (FBIM) de liaison de divers bus sur site.

3. Module (20) d'internet suivant la revendication 1 ou 2, qui comporte en outre un moyen (Init) d'initialisation, qui est conformé pour, après une panne de tension ou un redémarrage, accéder au fichier (vKonfig) de configuration mis en mémoire par les adresses (vADr) virtuelles, transformer celles-ci et, par les adresses (1Adr) logiques réelles obtenues, effectuer une phase d'initialisation pour être ensuite prêt à communiquer.
